Europäisches Patentamt

European Patent Office

Office européen des brevets

(11) Numéro de publication: **0 368 692**

**A1**

# DEMANDE DE BREVET EUROPEEN

Numéro de dépôt: 89402741.6

(51) Int. Cl.⁵ **G01S 17/46, G01S 17/88**

(22) Date de dépôt: 04.10.89

(30) Priorité: 07.10.88 FR 8813164

(43) Date de publication de la demande:
16.05.90 Bulletin 90/20

(84) Etats contractants désignés:
AT BE CH DE ES GB GR IT LI LU NL SE

(71) Demandeur: SOCIETE D'ETUDES ET
D'ENTREPRISES ELECTRIQUES( S.E.E.E.)
3 square Moncey
F-75009 Paris(FR)

(72) Inventeur: **Mann, Charles**
274 Rue du Fbg St Antoine
F-75012 Paris(FR)

(74) Mandataire: **Bernasconi, Jean et al**
CABINET LEMOINE ET BERNASCONI 13,
Boulevard des Batignolles
F-75008 Paris(FR)

(54) **Dispositif de détection de la position d'un mobile, notamment d'un aéronef, dans un plan.**

㊷ Le dispositif comporte (9) une source de rayonnement laser (7) émettant un faisceau de section plane et mince dans un secteur ayant un angle d'ouverture adapté aux possibilités de déplacement du mobile (3), parallèlement à la surface (1) de déplacement du mobile, au moins une caméra (8) sensible au réflexion dudit rayonnement, par exemple sur le train avant d'un avion (5), des moyens de calcul sensibles aux informations reçues pour déterminer la distance et l'azimut de ce point par rapport à un repère fixe et des moyens d'affichage (14) informant l'opérateur ou le pilote de la position du mobile.

Fig. 1

EP 0 368 692 A1

## Dispositif de détection de la position d'un mobile, notamment d'un aéronef, dans un plan.

La présente invention a trait à un dispositif de détection de la position d'un mobile dans un plan, destiné notamment à permettre le guidage ou le contrôle du mouvement du mobile dans le plan. L'invention peut être particulièrement appliquée au guidage d'un aéronef sur le plan constitué par un aéroport, notamment le guidage de l'aéronef sur une aire de stationnement vers et jusqu'à une passerelle.

Le guidage des aéronefs, notamment des avions de ligne, lors de leur arrivée à leur aire de stationnement, en général à proximité immédiate d'une passerelle d'embarquement et débarquement, est relativement complexe.

Ce guidage a longtemps été effectué par l'intermédiaire d'un opérateur, dénommé "batman", muni de deux signaux, un dans chaque main et donnant au pilote, par des gestes conventionnels, les instructions lui permettant d'amener l'avion dans une position dans laquelle la porte se trouve en face de la passerelle de débarquement. Il s'agit d'un travail pénible dans un environnement bruyant et dangereux.

On a déjà mis en oeuvre, pour résoudre ce problème, des moyens de détection magnétique placés dans le sol de l'aire de stationnement et permettant de détecter l'avion et de traduire sa position sur un panneau d'affichage visible depuis l'avion pour permettre au pilote de se positionner correctement. Un dispositif de ce genre est décrit, par exemple, dans le brevet britannique GB-A-1.508.418. Un tel dispositif est très onéreux à mettre en place et ne permet, dans la pratique, de guider l'avion que sur une faible surface.

En outre, ce dispositif de détection magnétique, placé dans un environnement hertzien et électromagnétique complexe, ne travaille pas dans les meilleures conditions.

Une autre solution proposée consiste à utiliser un engin vendu sous la marque UCRAFT et comprenant un mât supportant un bras articulé à l'extrémité duquel se trouve une barre lumineuse qui, conformément à des instructions préalablement entrées en fonction du type de l'aéronef, se place dans l'espace en un point. fonction du type d'aéronef et correspondant à "avant de la cabine de pilotage, de telle sorte que le pilote voyant ce point se dirige et s'arrête dessus.

Un tel dispositif nécessite une infrastructure mécanique importante et, étant composé de pièces mobiles, demande une surveillance et un entretien coûteux.

On a également proposé des dispositifs de guidage de type optique pour aéronef consistant à prévoir, sur le fuselage de l'aéronef, des repaires ou des codes qui peuvent être détectés par des moyens optiques de façon à repérer la position de l'aéronef. De tels dispositifs sont décrits dans les brevets US-A-3.775.741 et 4.249.159. Ces dispositifs nécessitent des inscriptions ou des modifications sur le fuselage de l'aéronef, ce qui est exclu dans la pratique. En outre aucune indication n'est fournie concernant la distance de l'aéronef par rapport à un repère de référence.

Dans le brevet US-A-3.729.262, on a prévu un dispositif de guidage visuel d'aéronef reposant sur l'utilisation de lampes haute intensité et de lentilles de Fresnel de façon à générer deux barres lumineuses visibles par le pilote de l'aéronef et qui varient dans leur repère respectif suivant le déplacement de l'aéronef. Ce dispositif ne permet pas de mesurer la distance entre l'aéronef et un repère et nécessite des réglages optiques complexes sans fournir une grande précision.

Le brevet US-A-4.736.247 décrit un dispositif de mesure de distance utilisant des moyens laser dont le faisceau est orienté par un réseau de miroirs et séparé en deux faisceaux secondaires au travers d'un prisme, le premier faisceau secondaire étant orienté vers une caméra vidéo pour créer une référence pour la mesure et, le second, après avoir effectué un chemin optique passant par trois miroirs, est envoyé sur le mobile dont on souhaite connaître la distance au point de référence. Les deux miroirs extrêmes sont orientés par des moteurs qui retournent des informations angulaires au calculateur. Ce dispositif est destiné à réaliser des mesures de distance entre deux mobiles te's que des satellites. Il doit générer sa propre référence et nécessite une technologie très complexe, extrêmement coûteuse.

Le brevet US-A-4.760.269 décrit un dispositif de mesure de la distance d'un objet dans lequel on projette, par des moyens laser, une image très précise sur une surface plane de l'objet et l'on étudie l'image saisie par une caméra vidéo. Ce dispositif exige, d'une part, la production d'une image extrêmement précise et, d'autre part, la présence, sur l'objet, d'une surface plane sur laquelle l'image est projetée, ces exigences étant incompatibles avec l'application au guidage d'un aéronef vers sa position de parking.

La demande de brevet EP-A-0.145 957 décrit un ensemble émetteur lumineux émettant un fin faisceau laser et comprenant une caméra vidéo pour générer une mesure de distance par triangulation d'une surface par rapport à une référence connue, une analyse de forme permettant en plus de pallier au problème de non-orthogonalité de cette surface par rapport à l'axe de visée de la caméra. Ce dispositif est destiné à des mesures à faible distance sur des surfaces d'objet qui sont susceptibles de se trouver dans une très petite zone et dans un environnement bien défini, tel que par exemple, les machines-outils. Ce dispositif ne pourrait pas être transposé au cas du guidage d'aéronef vers la position de parking.

La présente invention se propose de fournir un dispositif de détection de la position d'un mobile dans un plan qui soit extrêmement fiable, peu coûteux et susceptible de fonctionner même dans un environnement extrêmement difficile, y compris à l'extérieur.

Un autre objectif de l'invention est de fournir un tel dispositif qui permette le guidage d'un mobile dans un plan, y compris pour amener le mobile en un point fixe et déterminé.

Un autre objectif de l'invention est de fournir un tel dispositif permettant le guidage des aéronefs dans les aérodromes, notamment pour amener l'aéronef en un point précis d'accostage à une passerelle.

L'invention a pour objet un dispositif de détection de la position d'un mobile dans un plan, caractérisé par le fait qu'il comporte :

- une source de rayonnement laser susceptible d'émettre un faisceau laser dans un secteur de section plane et mince, sensiblement parallèlement à ladite surface, et avec un angle d'ouverture adapté aux possibilités de déplacement du mobile dans le plan pour intercepter un point déterminé du mobile dans le plan du faisceau,

- au moins une caméra sensible essentiellement aux réflexions dudit rayonnement laser pour recevoir un rayonnement réfléchi par ledit point mobile, la ou les caméras comprenant, ou étant associées à des moyens sensibles à la distance et à l'azimut dudit point par rapport à un repère géométrique fixe,

- et des moyens de calcul sensibles aux informations reçues par ladite caméra pour exploiter les informations reçues.

Dans une forme de réalisation avantageuse de l'invention, la caméra est écartée du plan de propagation du rayonnement laser, en étant disposée soit entre ce plan et le plan sur lequel se déplace le mobile, soit de préférence du côté de propagation de la lumière cohérente opposé au plan de déplacement du mobile.

La distance entre le plan du secteur de propagation du rayonnement laser et le plan de déplacement du mobile est déterminée, conformément à l'invention, par la distance séparant le point déterminé du véhicule dont on observe le rayonnement réfléchi, du plan matériel sur lequel se déplace le mobile.

De préférence, notamment lorsque des humains sont amenés à stationner ou se déplacer dans la zone de propagation du rayonnement, le plan de propagation du rayonnement est nettement écarté du niveau des yeux. Selon un perfectionnement avantageux, le plan de propagation peut, en outre, être très légèrement incliné par rapport au plan matériel de déplacement du mobile pour que le rayonnement finisse par rencontrer cette surface pour s'y atténuer et s'y disperser, loin de la zone utile dans laquelle on repère le déplacement du mobile.

De préférence, l'angle d'ouverture du secteur est déterminé par un système optique de diffraction de la lumière en provenance d'un laser. Cette solution est préférée à celle consistant à utiliser un dispositif mécanique rotatif ou pivotant tel qu'un miroir ou une optique rotative déplaçant, dans l'angle d'ouverture précité, un fin faisceau longiligne.

Conformément à l'invention, la caméra est associée à des moyens de filtre de façon à lui éviter d'être sensible à des longueurs d'ondes différentes de celle du rayonnement laser réfléchi par le mobile.

La caméra est, de préférence, située dans l'alignement de l'axe principal du rayonnement laser. Dans une telle forme de réalisation, on peut déterminer de façon simple la position en azimut du point déterminé du mobile en comptant, dans l'image saisie par la caméra, le nombre de pixels activés à droite et à gauche de la verticale médiane de la caméra par calcul barycentrique.

Dans cette forme de réalisation, la distance entre le point déterminé du mobile et le centre de référence, par exemple la caméra, est calculée en fonction de la hauteur à laquelle se trouve la raie lumineuse de l'image saisie par la caméra, cette hauteur augmentant ou diminuant au fur et à mesure que le mobile modifie sa distance par rapport à la caméra.

Dans son application au guidage d'aéronefs tels que les avions de ligne sur des aires de stationnement d'aéroports, notamment pour guider et immobiliser un avion contre une ou plusieurs passerelles fixes, le dispositif selon l'invention présente une source de rayonnement laser diffractée dans un plan sensiblement horizontal selon un angle d'ouverture de l'ordre de 3° à 10°, par exemple 6°, à une hauteur au-dessus du sol de préférence comprise entre 0,30 mètre et 1 mètre et, de façon particulièrement avantageuse, de l'ordre de 0,50 mètre, l'axe central du rayonnement étant de préférence aligné avec le plan sagittal de l'avion lorsque celui-ci est immobilisé dans la position exacte. La caméra est, de préférence, située sensiblement au-dessus de la source de rayonnement laser, par exemple à une hauteur de l'ordre de 1 à 3 mètres, de préférence de l'ordre de 2 mètres au-dessus du sol. Le plan du rayonnement laser est situé de préférence à environ 50 centimètre au-dessus de la surface de l'aire de stationnement et peut ainsi intercepter la partie antérieure du pneumatique du train de roulement antérieur d'un avion, sensiblement au milieu de celui-ci lorsque le pneumatique a un diamètre extérieur de l'ordre d'un mètre, ou un peu au-dessus du milieu pour des roues un peu plus petites.

Le rayonnement laser possède, par exemple, une longueur d'onde de 632,8 nm et la puissance peut avantageusement être de l'ordre de 25 à 35 mW. La caméra peut utiliser avantageusement un objectif de focale de l'ordre de 50 à 80 mm et posséder un capteur ayant, par exemple, 580 lignes et 520 colonnes, soit 301.600 pixels. La caméra est convenablement inclinée vers le bas par rapport à l'horizontale pour déterminer le champ utile dans lequel le dispositif est amené à fonctionner.

L'angle d'inclinaison de la caméra par rapport à la verticale est par exemple de l'ordre de 65 à 85,6°.

Dans une telle application à l'extérieur, les moyens de traitement d'image du calculateur sont avantageusement conçus de façon à ne traiter que la partie de l'image reçue par la caméra qui correspond à la distance la plus faible entre la caméra et la surface réfléchissante de l'avion de façon à éliminer les trains de roulement latéraux si ceux-ci se trouvent dans le champ angulaire du rayonnement.

Dans une forme de réalisation d'un tel dispositif, les moyens de traitement d'image peuvent avantageusement commander, en fonction d'un programme déterminé, un tableau de visualisation pouvant être, soit interne à l'avion et disposé dans le poste de pilotage, soit externe et de grande surface pour indiquer au pilote les manoeuvres à faire pour arriver au point de référence voulu pour l'immobilisation de l'appareil.

D'autres avantages et caractéristiques de l'invention apparaîtront à la lecture de la description suivante, faite à titre d'exemple non limitatif et se référant au dessin annexé dans lequel :

la figure 1 représente une vue schématique en élévation du dispositif selon l'invention pour le guidage d'avions sur une aire de stationnement d'aéroport,

la figure 2 représente une vue schématique de dessus du rayonnement laser, et

la figure 3 représente schématiquement une vue de dessus de deux postes conformes à la figure 1.

La figure 4 représente schématiquement l'organisation fonctionnelle d'un logiciel utilisé lors de la mise en oeuvre du dispositif.

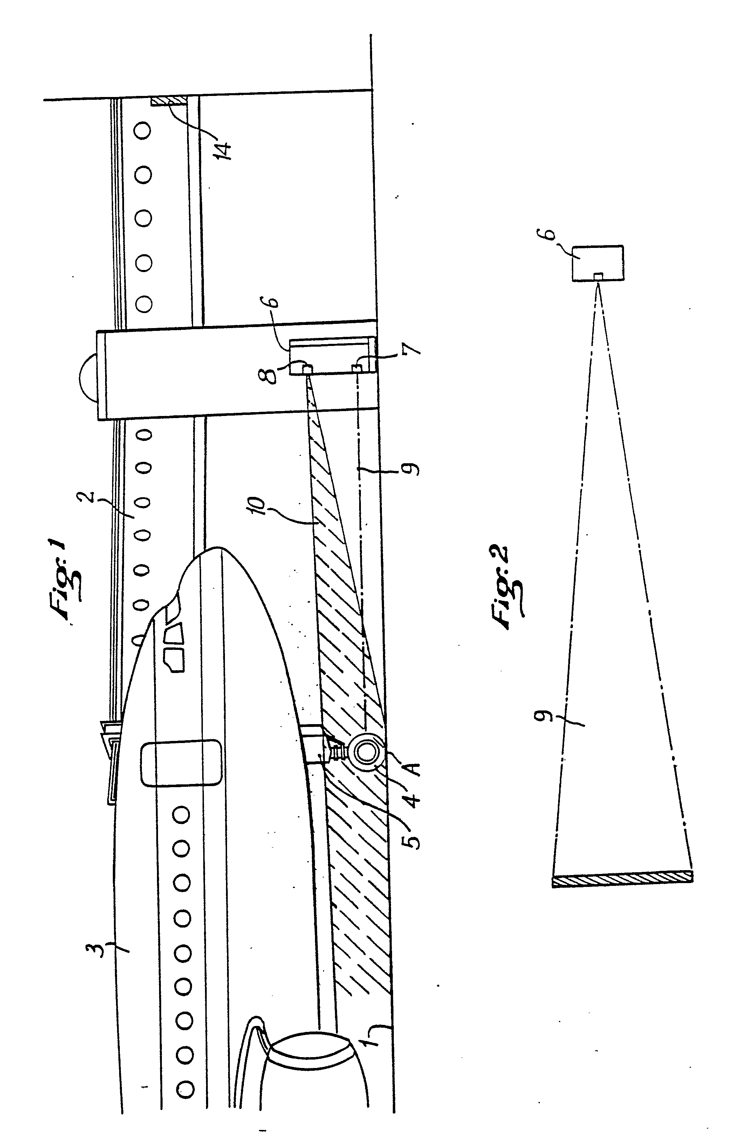

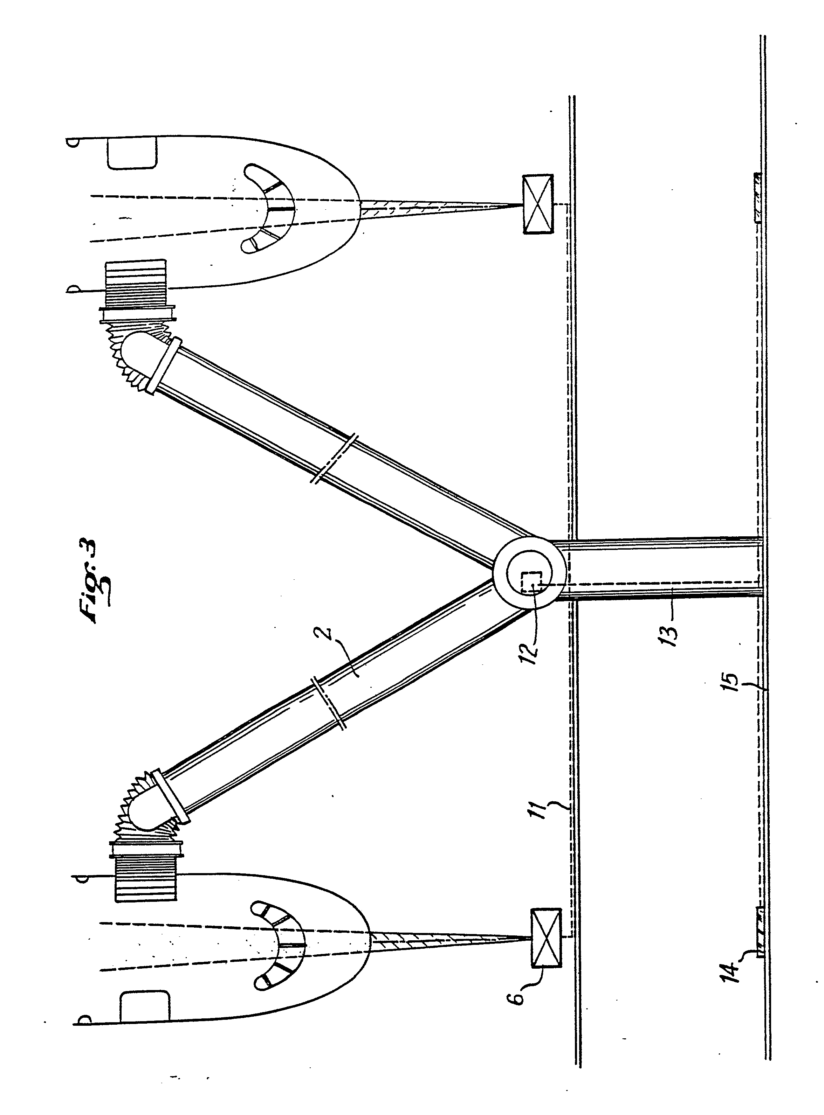

En se référant aux figures 1 à 3, on voit une aire de stationnement d'avions 1 comportant une passerelle fixe 2 devant laquelle doit s'immobiliser, de façon précise, l'avion 3.

Dans l'alignement de l'axe de l'avion se trouve, à une distance par exemple de 11 mètres du point d'appui de la roue 4 du train avant 5 de l'avion, lorsque l'avion est en position exacte par rapport à la passerelle, un coffret fixe 6. Dans ce coffret se trouve disposé, à un premier niveau, un ensemble 7 représenté schématiquement et comprenant les éléments suivants :

- un laser, par exemple, un laser hélium-néon de marque SIEMENS, de longueur d'onde 632,8 nm et de puissance 30mW,
- un focalisateur permettant de concentrer le faisceau laser,
- un dispositif optique de diffraction permettant d'obtenir, à 100 mètres du dispositif 7, un faisceau de 6 mètres de large sur 10 mm d'épaisseur,
- un hublot laissant passer le rayonnement, au niveau de la surface du coffret 6,
- un auvent devant le hublot pour protéger celui-ci, et
- éventuellement des moyens de nettoyage du hublot tels que par exemple un essuie-glace.

Cet ensemble 7 est agencé pour que le rayonnement 9 émis, dont l'angle d'ouverture est de 6°, soit sensiblement parallèle à la surface 1 de l'aire de stationnement et ceci à une distance de 50 cm de cette surface.

Plus précisément, le plan de propagation du faisceau laser est légèrement incliné par rapport à la surface de l'aire de stationnement pour qu'à 150 mètres, le rayonnement s'estompe dans le sol.

De façon avantageuse, on peut moduler la puissance lumineuse émise, qui doit être maximale pendant la journée, notamment en cas d'ensoleillement intense, et qui peut être nettement plus faible la nuit. Un tel dispositif peut être piloté par une cellule photo-électrique mesurant la luminosité extérieure et pilotant un disque absorbant placé devant la source laser.

A un niveau supérieur du coffret 6 à 2 mètres du sol, soit 1,5 mètre au-dessus de la source de rayonnement 7, se trouve disposé un ensemble 8 comprenant :

- une caméra CCD HRS MICAM de marque SYSTEME-SUD utilisant un objectif de focale 75 cm, distribuée par la société française DESI NOVOLEC ; cette caméra possède un capteur CCD constitué de 580 lignes et 520 colonnes, soit 301 600 pixels ; l'axe optique de la caméra disposé dans le plan vertical de l'axe central du rayonnement laser 9, est incliné vers le bas par rapport à la verticale d'un angle de 85,6° ; l'objectif de la caméra possède un angle d'ouverture de 6,5°, correspondant à une focale de 75 mm ; dans la mesure où, sur 580 pixels, seulement 500 sont utiles, chacun d'entre eux voit un cône dont l'angle solide a une valeur de $6,5 \times 10^{-3}$° ; compte tenu de l'inclinaison de la caméra par rapport à la verticale, un pixel se trouvant sur le haut du capteur couvre une surface horizontale d'une longueur de 560 mm alors qu'un pixel se trouvant dans le bas du capteur, correspondant aux points de la surface 1 les plus proches, voit un élément de surface plan de 13 mm de longueur ;
- un filtre interférentiel MELLES-GRIOT, de longueur d'onde 632,8 nm + -0,5, distribué par la société française DESI NOVOLEC, placé devant la caméra :
- un hublot permettant à la caméra de voir le rayonnement réfléchi,
- un tube cylindrique placé devant et dans l'axe de la caméra, sur une longueur égale à 10 fois son diamètre et muni à son intérieur d'un filetage et d'une anodisation de couleur noire mate pour constituer un piège à lumière.

On voit sur la figure 1. en traits hachurés, le cône de prise de vue de la caméra.

Le dispositif peut également présenter, dans un but de sécurité, un ou plusieurs boutons d'arrêt d'urgence, qui peuvent être placés sur le coffret pour permettre au personnel de piste de couper l'alimentation du laser. Des gyrophares peuvent être actionnés pendant que le laser fonctionne pour prévenir le personnel. Enfin les zones dans lesquelles sont mises en oeuvre les lasers peuvent être signalées par des panneaux conformes à la norme AFNOR NF X 08-003.

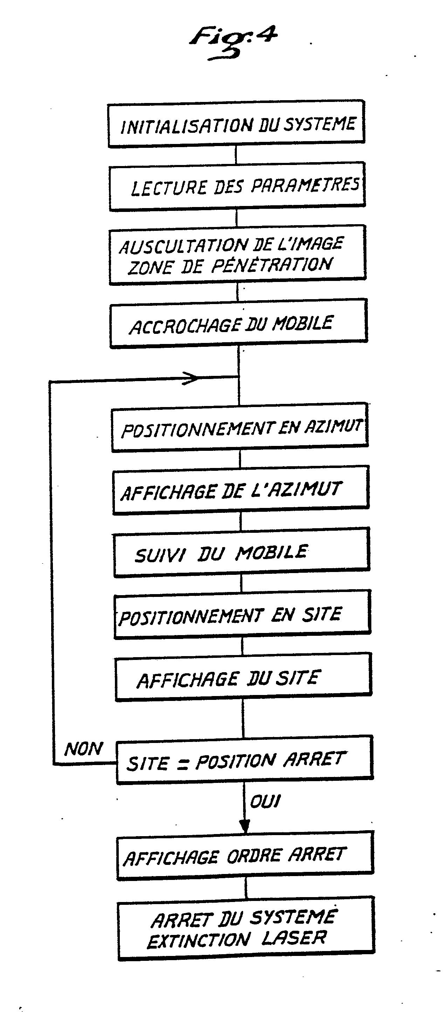

Un faisceau convenable de conducteurs divers 11 permet d'alimenter le coffret 6 et ses composants en puissance électrique requise. Il permet également de récupérer les informations électriques de la caméra et de les adresser à un calculateur de traitement d'images 12 qui, comme on le voit sur la figure 3, peut par exemple être conçu pour être utilisé dans deux dispositifs simultanément. Ce calculateur peut être, par exemple, un micro-ordinateur de type PC XT/AT, diffusé par la société IBM, avec une carte de traitement d'images CYCLOPE de marque SYSTEME-SUD.

Ce calculateur pilote, par des conducteurs convenables 13, un panneau d'affichage 14 visible du pilote de l'avion et indiquant, en caractères lumineux à celui-ci la distance à laquelle il se trouve du point fixe A auquel il soit parvenir, ce panneau 14 indiquant également au pilote s'il se trouve à gauche ou à droite de l'axe d'alignement centré sur le faisceau laser.

En fonctionnement, lorsque l'approche d'un avion est signalée, le calculateur est initialisé par l'indication du type de l'avion. Le dispositif lit alors, dans une base de données, les informations relatives à la géométrie de cet avion et aux différents paramètres qui y sont associés, ce qui détermine la position du point A de référence par rapport au coffret 6. L'image de la caméra est alors auscultée lorsque l'avion se trouve à peu près à une centaine de mètres du coffret, le pneumatique 4 de son train avant vient intercepter le rayonnement laser 9 et, l'avion avançant, la caméra 8 capte une image comportant un rayonnement réfléchi en direction de la caméra par le pneumatique 4. Ce rayonnement forme dans la caméra une tâche lumineuse contrastant avec l'absence de rayonnement ou le rayonnement moindre en provenance de l'environnement. Le calculateur analyse cette image en fonction des pixels activés. De façon extrêmement simple, il détermine si l'avion est à droite ou à gauche en comptant le nombre de pixels activés de part et d'autre de la ligne verticale centrale du capteur de la caméra selon un calcul de type barycentrique.

Un calcul barycentrique de même type est effectué en site, c'est-à-dire verticalement, la tache lumineuse se déplaçant verticalement au fur et à mesure que l'avion avance. Le calculateur 12 peut ainsi déterminer la distance du pneumatique par rapport au point de référence A et l'écartement de l'avion d'un côté ou de l'autre de l'axe d'alignement. En fonction de ces informations, il actionne le tableau d'affichage 14, qui indique au pilote son écart par rapport au plan vertical passant par la caméra et la source laser et la distance à laquelle le train avant de l'avion se trouve du point A. Lorsque le site correspond à la position d'arrêt, c'est-à-dire au point A, le calculateur affiche l'ordre d'arrêt sur le tableau de sorte que le pilote immobilise l'avion. Le calculateur éteint ensuite la source laser et met l'ensemble du dispositif en arrêt.

## Revendications

1. Dispositif de détection de la position d'un mobile dans un plan, utilisant des moyens d'émission de faisceau laser et une caméra sensible à la reflexion du faisceau sur le mobile, caractérisé par le fait qu'il comporte :
- une source de rayonnement laser (7) susceptible d'émettre un faisceau laser (9) dans un secteur de section plane et mince, sensiblement parallèlement à ladite surface, et avec un angle d'ouverture adapté aux possibilités de déplacement du mobile dans le plan pour intercepter un point déterminé du mobile situé dans le plan du faisceau,
- au moins une caméra (8) sensible essentiellement aux réflexions dudit rayonnement laser pour recevoir un rayonnement réfléchi par ledit point du mobile, la ou les caméras comprenant, ou étant associés à, des moyens sensibles à la distance et à l'azimut dudit point par rapport à un repère géométrique fixe,
- et des moyens de calculs (12) sensibles aux informations reçues par la ou lesdites caméras pour exploiter les informations reçues.

2. Dispositif selon la revendication 1, caractérisé en ce qu'il comporte une seule caméra (8).

3. Dispositif selon la revendication 2, caractérisé en ce que ladite caméra est écartée du plan de propagation du rayonnement laser.

4. Dispositif selon l'une des revendications 2 et 3, caractérisé en ce que ladite caméra est située sensiblement à l'aplomb de la source laser (7) par rapport au plan de déplacement du mobile.

5. Dispositif selon la revendication 4, caractérisé en ce que ladite caméra (8) est située au-dessus de la source de rayon laser (7).

6. Dispositif selon l'une quelconque des revendications 1 à 5, caractérisé en ce que l'ouverture du faisceau du rayonnement laser (9) est déterminée par des moyens de diffraction.

7. Dispositif selon l'une quelconque des revendications 1 à 6, caractérisé en ce que ladite caméra est associée à des moyens de filtre lui évitant d'être sensible à des longueurs d'onde différentes de celles du rayonnement laser réfléchi par la mobile.

8. Dispositif selon l'une quelconque des revendications 1 à 7, caractérisé en ce que l'axe optique de la caméra est incliné par rapport aux plans sensiblement parallèles du rayonnement laser et de la surface de déplacement du mobile, en direction de la zone de déplacement du mobile.

9. Dispositif selon l'une quelconque des revendications 1 à 8, notamment pour guidage d'aéronefs, notamment sur des aires de stationnement, caractérisé en ce que le plan de propagation de laser est écarté de la surface de l'aire de stationnement d'une distance permettant audit rayonnement d'intercepter un point du train avant de l'aéronef.

10. Dispositif selon la revendication précédente, caractérisé en ce que ledit point déterminé est constitué par le pneumatique du train avant.

11. Dispositif selon l'une quelconque des revendications 9 et 10, caractérisé en ce que la distance entre les deux plans est de l'ordre de 50 cm.

12. Dispositif selon l'une quelconque des revendications 1 à 11, caractérisé en ce que le rayonnement laser et la caméra sont alignés dans le plan vertical dans lequel doit se trouver le mobile ou aéronef dans la position arrêtée.

13. Dispositif selon l'une quelconque des revendications 1 à 12, caractérisé en ce que des données relatives à la position en azimut et en distance dudit point fixe sont affichées par les moyens de calcul sur un panneau d'affichage.

14. Dispositif selon l'une quelconque des revendications 1 à 13, caractérisé en ce que le rayonnement laser a une longueur d'onde de 632,8 nm.

15. Dispositif selon l'une quelconque des revendications 9 à 14, caractérisé en ce que le calculateur comporte un programme permettant de déterminer la position d'arrêt de l'aéronef en fonction du type d'aéronef.

16. Dispositif selon l'une quelconque des revendications 1 à 15, caractérisé en ce que le plan de propagation est très légèrement incliné par rapport au plan matériel de déplacement du mobile pour que le rayonnement finisse par s'atténuer et se disperser.

Fig. 1

Fig. 2

EP 0 368 692 A1

Fig. 3

EP 0 368 692 A1

*Fig.4*

INITIALISATION DU SYSTEME

LECTURE DES PARAMETRES

AUSCULTATION DE L'IMAGE
ZONE DE PÉNÉTRATION

ACCROCHAGE DU MOBILE

POSITIONNEMENT EN AZIMUT

AFFICHAGE DE L'AZIMUT

SUIVI DU MOBILE

POSITIONNEMENT EN SITE

AFFICHAGE DU SITE

NON — SITE = POSITION ARRET

OUI

AFFICHAGE ORDRE ARRET

ARRET DU SYSTEME
EXTINCTION LASER

# RAPPORT DE RECHERCHE EUROPEENNE

Office européen
des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,D | US-A-4 760 269 (McKENNA) <br> * En entier * | 1-8 | G 01 S 17/46 <br> G 01 S 17/88 |
| Y | | 9,10,13,15 | |
| Y,D | GB-A-1 508 418 (ANDERBERG) <br> * En entier * | 9,10,13,15 | |
| X,D | EP-A-0 145 957 (CARL ZEISS) <br> * Résumé; page 2, lignes 18-24; figures 1,2,5; page 3, ligne 8 - page 4, ligne 1; page 4, lignes 22-28 * | 1-5 | |
| Y | | 7,8,12,13 | |
| Y,D | US-A-3 775 741 (ZECHNOWITZ) <br> * En entier * | 7,8,12,13 | |
| X,D | US-A-4 736 247 (GRAHAM et al.) <br> * Résumé; figures 1,2; colonne 3, lignes 14-45 * | 1,2,14 | |
| X | APPLIED OPTICS, vol. 27, no. 12, 15 juin 1988, page 2363, New York, NY, US; J.K. RUSSELL: "TV-and-laser range-measuring system" <br> * En entier * | 1,2,14 | DOMAINES TECHNIQUES RECHERCHES (Int. Cl.5) <br><br> G 01 S <br> B 64 F <br> G 08 G |
| A,D | US-A-4 249 159 (STASKO) <br> * En entier * | 1,9,13 | |
| A,D | US-A-3 729 262 (SNEAD et al.) <br> * Résumé; figures 1,2; colonne 3, ligne 4 - colonne 4, ligne 46 * | 9,13,15 | |

Le présent rapport a été établi pour toutes les revendications

| Lieu de la recherche | Date d'achèvement de la recherche | Examinateur |
|---|---|---|
| LA HAYE | 16-01-1990 | BLONDEL F.J.M.L.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)